# EUROPÄISCHE PATENTANMELDUNG

(11) **EP 1 897 432 A1**
(43) Veröffentlichungstag der Anmeldung: **12.03.2008**
(21) Anmeldenummer: 07107846.3
(22) Anmeldetag: 09.05.2007
(51) Int. Cl.: A01G 5/02

(54) **Verfahren und Vorrichtung zum Verarbeiten von hintereinander angeordneten Dekorationsartikeln und zum Herstellen von Kränzen**

(30) Priorität: 31.05.2006 DE 102006025783
(71) Anmelder: Kewes, Oliver, 50189 Elsdorf (DE); Kewes, Paul, 50189 Elsdorf (DE)
(72) Erfinder: Kewes, Oliver, 50189 Elsdorf (DE); Kewes, Paul, 50189 Elsdorf (DE)
(74) Vertreter: Bungartz, Klaus Peter

(57) **Zusammenfassung**

Die Erfindung betrifft ein Verfahren und eine Vorrichtung zum Verarbeiten von hintereinander angeordneten Dekorationsartikeln, insbesondere von Tannenästen, die später zu einem Kranz weiterverarbeitet werden können.

Bei den bekannten Verfahren werden die Dekorationsartikel (1) nicht oder zu ungeordneten Girlanden weiterverarbeitet. Dies führt zu einer schwierigen Weiterverarbeitung oder zu einem unschönen Äußeren des späteren Endproduktes. Die Erfindung verbessert dies dadurch, die Verarbeitungsanlage eine Befestigungsvorrichtung (2) aufweist, über die zumindest mehrere hintereinander angeordnete Dekorationsartikel (1) zu einem zusammenhängenden Band (3) zusammengefasst und miteinander verbindbar sind. Ferner wird die Verbesserung durch eine Vorrichtung erzielt, die die Dekorationsartikel zusammenfassen und verbinden, insbesondere Vernähen kann.

## Beschreibung

Die Erfindung betrifft ein Verfahren und eine Vorrichtung zum Verarbeiten von hintereinander angeordneten Dekorationsartikeln und zum Herstellen von Kränzen, insbesondere frische oder getrocknete Pflanzenteile, wobei die Dekorationsartikel hintereinander in zumindest einer Reihe einer Verarbeitungsanlage zugeführt und in der Verarbeitungsanlage zu einem zusammenhängenden Dekorationsprodukt verarbeitet werden.

Derartige Verfahren sind aus der DE 24 31 428 A und aus der inhaltsgleichen DE 74 22 262 U bekannt. Hier werden als Dekorationsartikel kleine Äste aus zugeschnittenem Tannengrün verwendet, die zu einem Kranz verarbeitet werden. Typsicherweise weist ein solcher Kranz einen als Römer bezeichneten Kranzkörper auf, der dann mit dem Tannengrün beschichtet wird. Hierbei wird das Tannengrün zunächst von größeren Tannenzweigen abgeschnitten und über eine Saugvorrichtung an den Kranzkörper angeregt, wo es über eine Bindevorrichtung auf den Körper beispielsweise mittels eines Drahtes gebunden wird.

Obwohl mit diesem Verfahren weitgehend automatisiert Kränze herstellbar sind, hat es doch den Nachteil, dass das Tannengrün definiert zerschnitten werden muss, so dass sich verarbeitungsfähige kleinere fächerförmige Tannenabschnitte ergeben. Da Naturprodukte nicht regelmäßig wachsen, besteht dabei häufig das Problem, dass die Äste während des Bindeverfahrens entweder manuell zusammen gelegt werden müssen oder aus der Verarbeitung herausgenommen werden müssen, da ansonsten ein unschöner optischer Eindruck entstehen würde, wenn Seitenästchen ungerichtet abstehen. Neben dem entstehenden Abfall ist das Sortieren mit erheblichem manuellem Aufwand verbunden.

Aus der DE 85 18 809 U1 wiederum ist ein Verfahren zum Binden von Kränzen bekannt, bei dem das Grünmaterial vor der Verarbeitung girlandenartig zusammengefasst wird. Auch bei diesem Verfahren besteht das Problem, dass unregelmäßig abstehende Äste dazu führen, dass ein unschöner optischer Eindruck entsteht. Ferner lässt sich aus Girlanden nur schwer der Eindruck einer ebenen Beschichtung des Römers mit einem durchgängigen Grün erzielen.

Aufgabe der Erfindung ist es daher, ein Verfahren sowie eine Vorrichtung zu schaffen, mit der vielfältige Dekorationsartikel leicht zu einem verarbeitbaren Zwischenprodukt zusammengefasst werden können. Insbesondere ist es weitere Aufgabe der Erfindung, ein Verfahren zum Binden eines Kranzes zu schaffen, das die Herstellung optisch möglichst schöner Kränze gewährleistet.

Diese Aufgabe wird nach der Erfindung dadurch gelöst, dass die Verarbeitungsanlage eine Befestigungsvorrichtung aufweist, über die zumindest über mehrere hintereinander angeordnete Dekorationsartikel zu einem zusammenhängenden Band zusammengefasst und miteinander verbindbar sind.

Das erfindungsgemäße Verfahren betrifft die Herstellung eines Zwischenproduktes, nämlich des zusammenhängenden Bandes. Dieses zusammenhängende Band kann dann zum Endprodukt weiter verarbeitet werden, wobei dieses Endprodukt insbesondere ein Kranz aus einem Grünmaterial sein kann. Unter Grünmaterial wird in Verbindung mit der vorliegenden Erfindung nicht nur frisches, sondern auch getrocknetes Material verstanden, das zu einem Dekorationsprodukt oder einem sonstigen Produkt weiter verarbeitet werden soll. Dieses können die bereits bei der Beschreibung des Standes der Technik genannten Tannenabschnitte sein, natürlich können auch andere Pflanzenabschnitte oder Ähnliches verarbeitet werden. Insbesondere ist es auch möglich, mit dem vorliegenden Verfahren beispielsweise getrocknete Getreideähren, Gräser oder Ähnliches zu verarbeiten. Generell ist die Erfindung auf alle Produkte anwendbar, die als im Wesentlichen schmale längliche Produkte hintereinander zu einem Endprodukt verarbeitet werden sollen.

Mögliche Anwendungsbereiche der Erfindung sind daher auch die Herstellung von Girlanden, Zwischenprodukte zur Herstellung von Schmuckbrettchen, die mit Dekorationsartikeln belegt werden sollen oder Ähnlichem.

Erfindungsgemäß werden die Dekorationsartikel nun zu einem zusammenhängenden Band zusammengefasst. So können die einzelnen, ansonsten schwer handhabbaren Einzelartikel leicht miteinander verbunden werden, so dass sich ein besonders einfach zu verarbeitendes Zwischenprodukt ergibt. Eine erste Ausgestaltung der Erfindung vernäht die Dekorationsartikel zum zusammenhängenden Band. Hierzu werden sie über eine geeignete Zuführung der Nähvorrichtung zugeführt, die dann mit dem Fachmann bekannten Nähmaßnahmen ein zusammen hängendes Band erstellt. Dabei ist es möglich, aber nicht erforderlich, dass die Dekorationsartikel auf ein Trägerband aufgelegt werden, so dass die Nähvorrichtung die einzelnen Artikel mit diesem Band vernähen kann. Dieses Trägerband wird bevorzugt mit halmförmigen, etwa gräserartigen Dekorationsartikeln verwendet werden.

Durch geeignete Wahl des Materials kann das Trägerband und auch das Nahtmaterial so gestaltet werden, dass es im späteren Endprodukt nicht oder kaum auffällt. Sowohl das Trägerband als auch das Nahtmaterial können von natürlichen Materialien gebildet sein, so dass zusammen mit einem kompostierbaren Römer ein voll ökologischer Aufbau des späteren Artikels, etwa des Kranzes, möglich ist.

Alternativ zum Vernähen der einzelnen Dekorationsartikel können diese bei einer einfacheren Ausgestaltung auch auf ein Trägerband geheftet werden. Hierzu kann eine übliche Heftvorrichtung vorgesehen werden, die im Abstand Heftklammern unter Einklemmen der Dekorationsartikel auf das Trägerband aufsetzt. Bei entsprechend dichtem Material kann auf das Trägerband auch im Falle einer Heftvorrichtung verzichtet werden, dann nämlich, wenn die Heftklammern jeweils benachbarte Bereiche der hintereinander folgenden Dekorationsartikel zu erfassen vermag.

In vielen Fällen wird der Dekorationsartikel zunächst vorsortiert werden müssen, um eine möglichst homogene Struktur des zu erzielenden Zwischenproduktes zu erhalten. Hierfür können die Dekorationsartikel auf ein Transportband aufgelegt werden, über das sie der Befestigungsvorrichtung zugeführt werden können. Falls ein Trägerband verwendet wird, kann dieses Trägerband ebenfalls auf dem Transportband aufliegen. Alternativ kann das Trägerband auch erst im Rahmen der Befestigungsvorrichtung zugeführt werden, so dass sich in der Befestigungsvorrichtung ein Zusammenlaufen des Trägerbandes mit dem Zustrom der Dekorationsartikel ergibt.

Bei einer besonders bevorzugten Ausgestaltung des Verfahrens werden Äste, insbesondere Tannenäste verwendet, um ein Zwischenprodukt herzustellen, das für die spätere Herstellung eines Kranzes Verwendung findet. Bei dieser Ausgestaltung müssen zunächst die Abschnitte der Tanne für die Verarbeitung vorbereitet werden. Hierzu werden übliche Tannenäste zerteilt, so dass sich etwa handtellergroße Abschnitte ergeben, die von einem kleinen Ast mit daran angeordneten kleineren Seitenästen gebildet sind. Natur bedingt werden diese kleineren Seitenäste nicht nur seitlich in einer Ebene abstehen, sondern gelegentlich auch verdreht sein oder in andere Ebenen hervorspringen sowie in verschiedenen Winkeln von den kleinen Ästen ausgehen.

Um ein möglichst homogenes Bild des späteren Kranzes zu erreichen, wird nun der bevorzugt handtellergroße Tannenabschnitt derart auf das Transportband gelegt, dass über die Befestigungsvorrichtung ein möglichst homogener Bandabschnitt erzeugt werden kann. Hierzu weist das Transportmittel Haltemittel auf, zwischen die manuell oder auch über eine automatische Zuführung die Tannenabschnitte eingelegt werden können. Die Haltemittel werden bevorzugt von aus der Ebene des Transportbandes hervorspringenden Stiften oder Rändern gebildet, zwischen die unter Anlegen der Seitenästchen die Äste des Tannengrüns eingesteckt werden können.

Bei einer bevorzugten Ausgestaltung des Verfahrens sind etwa die Haltemittel 2 bis 3 cm voneinander entfernt. Die etwa handtellergroßen Tannenabschnitte können dann zwischen die Haltemittel gesteckt werden, wobei in Vorschubrichtung die Seitenästchen an den zentralen kleineren Ast angelegt werden. Die so zusammengelegten Tannenabschnitte werden dann der Befestigungsvorrichtung zugeführt, wobei durch die Befestigungsmaßnahme die nach oben abstehenden Ästchen in die Ebene des Mittelastes herunter gedrückt werden.

Bevorzugt ist die Befestigungsvorrichtung in diesem Fall eine Nähvorrichtung, die ohne Verwendung eines Trägerbandes die so zugeführten Tannenabschnitte zu einem durchgängig Band aus Tannengrün verbindet, wobei das Band im Wesentlichen von dem Nähfaden gebildet ist. Der Nähfaden ist natürlich bevorzugt in der Farbe ausgebildet, damit er im späteren Kranz nicht auffällt. Das Material kann so gewählt werden, dass es leicht kompostierbar ist, um einen Kranz zu schaffen, der vollständig ökologisch wieder verwertbar ist.

Bei einem bevorzugten Verfahren werden von größeren Tannenabschnitten, die etwa 0,5 bis 1 m Länge aufweisen, zunächst von den Ästen die kleineren Abschnitte gelöst. Hierzu kann eine aus dem Stand der Technik bereits bekannte Schneidevorrichtung verwendet werden, die die kleineren Abschnitte von den Hauptästen abtrennt. Dieses Verfahren kann so oft wiederholt werden, bis sich die etwa handtellergroßen Abschnitte, die für die weitere Verarbeitung benötigt werden, ergeben. Da auch hier erwartungsgemäß keine regelmäßigen Abschnitte entstehen werden, kann das Material zunächst auf die Zuführung aufgefädelt werden und anschließend an zumindest einer Seite abgelängt werden, so dass sich eine gewünschte Normlänge ergibt. Im Falle des zu verarbeitenden Tannengrüns ist das Ablängen an nur einer Seite sinnvoll, bei Verwendung anderer Materialien kann es dagegen auch sinnvoll sein, ein solches Ablängen auf beiden Seiten vorzunehmen.

Die so in der Länge normierten und auf die Zuführung aufgefädelten Tannenprodukte können dann der als Nähvorrichtung beispielsweise ausgebildeten Befestigungsvorrichtung zugeführt werden. Soll ein durchgängiges Band ohne Vorkehrungen für eine spätere Verwendung hergestellt werden, wird kontinuierlich Tannengrün auf die Zuführung aufgebracht werden. Soll dagegen aus dem Zwischenprodukt ein Kranz hergestellt werden, kann es ratsam sein, einer späteren Zerteilung des zusammenhängenden Bandes dadurch Rechnung zu tragen, dass an den späteren Schnittstellen Abstände zwischen den einzelnen Abschnitten der Dekorationsartikel vorgesehen werden.

Wird beispielsweise Tannengrün verwendet, werden bevorzugt wechselweise längere und kürzere Abschnitte auf die Zuführung aufgefädelt. Zwischen diesen einzelnen Abschnitten befindet sich ein beispielsweise 1 bis 3 cm langer Zwischenraum, der nur von dem Nahtfaden gebildet ist, so dass sich trotz dieser Abschnitte das zusammenhängende Band ergibt.

Nach Vernähen der Dekorationsartikel kann in diesem Fall über einen Cutter, der insbesondere von einer Schneidevorrichtung gebildet sein kann, das zusammenhängende Band wieder in Einzelteile zerlegt werden, so dass sich längere und kürzere Abschnitte von zusammengefassten Tannenzweigen ergeben. Diese unterschiedlichen Längen sind insbesondere dann hilfreich, wenn die Abschnitte zum Belegen eines Römers, also eines Kerns eines Kranzes verwendet werden. Da hier auf der Innenseite weniger Material erforderlich ist als auf der Außenseite des Kranzkörpers kann jedes zweite Stück kürzer gewählt werden, so dass diese kürzeren Stücke, wenn alle Stücke von außen angelegt werden, sich nur um die äußeren Bereich des Römers legen, während die längeren Stücke auch den inneren Bereich der Mantelfläche des Toruskörpers bedecken.

Nach dem Belegen des Römers können dann die Abschnitte fixiert werden, die geschieht zum Beispiel, wie bisher, über eine Bindemaschine. Durch die maschinelle Vorverarbeitung des als Dekorationskörper verwendeten Schnittgutes wird nun die Verarbeitung wesentlich effektiver, während bei Verarbeitung von Tanngrün zu einem Kranz die Abschnitte manuell sortiert und zusammengefasst werden mussten, reicht es beim Verfahren nach der Erfindung, wenn nur grobe Ausreißer aus der gewünschten Form aussortiert werden und die restlichen Stücke auf das Band der Zuführung aufgesteckt werden. Hierdurch können pro Mitarbeiter und Zeiteinheit nun statt sechs Kränzen zwanzig Kränze hergestellt werden.

Die Erfindung betrifft weiter eine Vorrichtung zur Durchführung des oben beschriebenen Verfahrens. Diese Vorrichtung weist natürlich als Hauptmerkmal die Befestigungsvorrichtung auf, die beispielsweise von einer Nähmaschine oder einem Heftgerät gebildet sein kann. Eine Zuführung führt die aufgereihten Dekorationsartikel der Befestigungsvorrichtung zu, wo entweder nebeneinander liegende Dekorationsartikel miteinander verbunden werden oder auf einem Trägerband fixiert werden.

Die Zuführung wird bevorzugt von einem üblichen Transportband gebildet, das Haltemittel aufweisen kann, zwischen die die Dekorationsartikel eingefädelt werden können. Dies ist besonders bei Tannen- oder sonstigen Pflanzenzweigen vorteilhaft, da in diesem Fall die Zweige leicht auf eine normierte Form vorgeformt werden können.

Die Dekorationsartikel können vor oder nach dem Durchlaufen der Befestigungsvorrichtung in der Breite ein- oder auch beidseitig beschnitten werden, um eine einheitliche Breite des herzustellenden zusammenhängenden Bandes zu realisieren. Nach der Herstellung des Bandes kann dies dann zwischengelagert oder unmittelbar weiterverarbeitet werden. Die weitere Verarbeitung kann ein Zerschneiden des Bandes beinhalten, hierfür weist die Vorrichtung dann den bereits beschriebenen Cutter auf.

Ein Greifer kann dann über eine Greif- oder Saugvorrichtung die Abschnitte greifen und an einen Grundkörper, insbesondere den Römer eines Kranzes anlegen, um so das fertige Produkt möglich weit automatisiert herzustellen.

Das erfindungsgemäße Verfahren kann zur Herstellung der bereits beschriebenen Kränze genutzt werden, es ist aber auch möglich, das endlos Band mit den miteinander verbundenen Dekorationsartikeln für alle anderen Dekorationszwecke zu nutzen. So können auch kleine Brettchen mit einem Stück des Bandes belegt werden oder es können Dekorationen für Tische oder ähnlichem hergestellt werden. Im letztgenannten Fall kann einfach eine Klettverbindung, etwa mit dem Tisch oder einer Tischdecke, dadurch hergestellt werden, dass das Endlosband mit einem Trägerband hergestellt wird, dass als Klettband oder Filzband ausgebildet ist, so dass es einfach an ein korrespondierendes Band angeheftet werden kann.

Weitere Merkmale und Vorteile der Erfindung ergeben sich aus den Unteransprüchen und aus der nachfolgenden Beschreibung bevorzugter Ausführungsbeispiele anhand der Zeichnung.

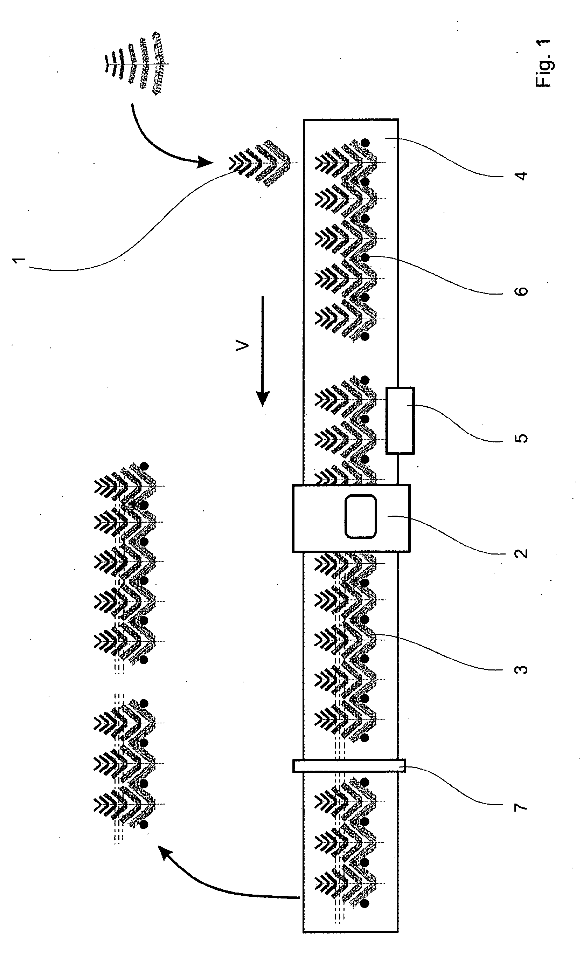

In der Zeichnung zeigt Figur 1 in einer schematisierten Darstellung den erfindungsgemäßen Verfahrensschritt der Herstellung eines vernähten Bandes als Zwischenprodukt für die Herstellung eines Tannenkranzes.

Die Tannenäste werden zunächst in einer hier nicht dargestellten Maschine verkleinert, also kleinere, etwa Handteller große Aststücke abgeschnitten. Dies geschieht über eine Schneidevorrichtung, die entlang des Hauptastes die einzelnen Unteräste abschneidet, wobei dies solange mit dem Schnittgut wiederholt wird, bis die gewünschte Größe erzielt ist. Die so hergestellten Dekorationsartikel 1 werden dann zunächst grob vorsortiert. Anschließend werden die kleinen Ästchen an den Mittelast gedrückt und die als Dekorationsartikel 1 dienenden Tannabschnitte zwischen Haltemittel 6 der Zuführung 4 gelegt. Hierdurch erfolgt bereits eine Vorformung, die ein unschönes Abstehen einzelner Ästchen von dem späteren Kranz vermeidet.

Im gezeigten Ausführungsbeispiel weist die Zuführung 4 äquidistant längst der Vorschubrichtung V angeordnete Haltemittel 6 in Stiftform auf, die rechtwinklig nach oben von dem Förderband hervorspringen. Um längere und kürzere Abschnitte zu realisieren wird an der gewünschten Stelle ein Abstand zwischen zwei oder mehr Haltemitteln 6 freigelassen.

Die so aufgefädelten Tannenabschnitte durchlaufen dann die Befestigungsvorrichtung 2, die hier als Nähmaschine ausgebildet ist. Diese vernäht, hier ohne Trägerband, die Abschnitt zu einem durchgängigen Endlosband. Die Abschnitte werden, um eine einheitliche Länge zu realisieren, zuvor über eine Schneidevorrichtung 5 aus einer geforderten Sollbreite zugeschnitten.

Das so hergestellte Endlosband wird nun einem Cutter 7 zugeführt, der das Ban wieder zerteilt, um die erforderlichen Abschnitte zu erhalten, die von einem (hier nicht dargestellten) Greifer erfasst und an den Römer eines Kranzes angelegt werden, um dort mittels einer Bindemaschine befestigt zu werden.

Die zuvor anhand einer Kranzbindemaschine für Tannenkränze beschriebene Vorrichtung kann zur Verarbeitung einer Vielzahl von natürlichen oder künstlichen Dekorationsartikeln genutzt werden, die nicht nur zu Kränzen sondern auch vielfältige Arten verarbeitet werden können. Obwohl eine bevorzugte Anwendung die Herstellung der Kränze ist, soll die Erfindung daher nicht hierauf beschränkt sein.

## Patentansprüche

1. Verfahren zum Verarbeiten von hintereinander angeordneten Dekorationsartikeln (1), insbesondere frische oder getrocknete Pflanzenteile, wobei die Dekorationsartikel (1) hintereinander in zumindest einer Reihe einer Verarbeitungsanlage zugeführt und in der Verarbeitungsanlage zu einem zusammenhängenden Dekorationsprodukt verarbeitet werden, **dadurch gekennzeichnet, dass** die Verarbeitungsanlage eine Befestigungsvorrichtung (2), insbesondere in Form einer Nähvorrichtung, aufweist, über die zumindest mehrere hintereinander angeordnete Dekorationsartikel (1) zu einem zusammenhängenden Band (3) zusammengefasst und miteinander verbunden werden.

2. Verfahren zum Verarbeiten von hintereinander angeordneten Dekorationsartikeln (1) nach Anspruch 1, **dadurch gekennzeichnet, dass** die Dekorationsartikel (1) vor dem Befestigen durch die Befestigungsvorrichtung (2) auf ein Trägerband aufgelegt werden und über die Befestigungsvorrichtung (2) auf diesem Trägerband fixiert werden.

3. Verfahren zum Verarbeiten von hintereinander angeordneten Dekorationsartikeln (1) nach einem der beiden vorhergehenden Ansprüche, **dadurch gekennzeichnet, dass** die Verarbeitungsanlage eine insbesondere bandförmige Zuführung (4) aufweist, auf das die Dekorationsartikel (1) zumindest hintereinander aufgelegt werden, wobei die Zuführung (4) die Dekorationsartikel (1) durch die Befestigungsvorrichtung (2) führt.

4. Verfahren zum Verarbeiten von hintereinander angeordneten Dekorationsartikeln (1) nach einem der vorhergehenden Ansprüche, **dadurch gekennzeichnet, dass** die Zuführung von einem Transportband gebildet ist, das in Vorschubrichtung (V) hintereinander angeordnete Haltemittel (6) aufweist, zwischen die die Dekorationsartikel (1) einsteckbar sind.

5. Verfahren zum Verarbeiten von hintereinander angeordneten Dekorationsartikeln (1) nach Anspruch 2, **dadurch gekennzeichnet, dass** die Befestigungsvorrichtung (2) eine Heftvorrichtung ist, die die zugeführten Dekorationsartikel (1) über Heftklammern auf dem Trägerband fixiert.

6. Verfahren zum Verarbeiten von hintereinander angeordneten Dekorationsartikeln (1) nach einem der vorhergehenden Ansprüche, **dadurch gekennzeichnet, dass** die Dekorationsartikel (1) zumindest einseitig auf eine vorgegebenen Solllänge über eine Ablängvorrichtung (5), insbesondere eine Schneidvorrichtung gekürzt werden.

7. Verfahren zum Herstellen von Kränzen, wobei die Dekorationsartikel (1) zu dem Kranz zusammengefasst und dann fixiert werden und die Dekorationsartikel (1) nach einem Verfahren nach einem der vorhergehenden Ansprüche zu dem zusammenhängenden Band (3) zusammengefasst werden und in einer Kranzbindevorrichtung zu einem Kranz verarbeitet werden, wobei die Dekorationsartikel (1) auf einen vorgefertigten Römer (Kranzkörper) aufgelegt und anschließend über eine Bindevorrichtung fixiert werden.

8. Verfahren zum Herstellen von Kränzen nach dem vorhergehenden Anspruch, **dadurch gekennzeichnet, dass** das zusammenhängende Band (3) der Dekorationsartikel (1) nach dem Zusammenfassen in einzelne Abschnitte zerteilt wird, insbesondere zerschnitten wird, und die Abschnitte dann auf den Kranzkörper aufgelegt werden; wobei das zusammenhängende Band (3) wechselweise in kurze und längere Abschnitte zerteilt wird und die kurzen Abschnitte an der äußeren Seite des Kranzkörpers und die längeren Abschnitte an der inneren und äußeren Seite des Kranzkörpers angelegt werden.

9. Verfahren zum Herstellen von Kränzen nach dem vorhergehenden Anspruch, **dadurch gekennzeichnet, dass** die Dekorationsartikel (1) derart zu dem zusammenhängenden Band (3) zusammengefasst werden, dass das Band (3) einzelne Abschnitte aufweist, wobei zwischen den Dekorationsartikeln (1) der einzelnen Abschnitte in Vorschubrichtung des Bandes (3) ein Abstand verbleibt.

10. Verfahren zum Herstellen von Kränzen nach den beiden vorhergehenden Ansprüchen, **dadurch gekennzeichnet, dass** das zusammenhängenden Band (3) im Bereich der Abstände zwischen den einzelnen Abschnitten zerteilt wird.

11. Verfahren zum Verarbeiten von hintereinander angeordneten Dekorationsartikeln (1) nach einem der vorhergehenden Ansprüche, **dadurch gekennzeichnet, dass** als Dekorationsartikel (1) Äste einer Pflanze, insbesondere einer Tanne oder sonstige Äste einer immergrünen Pflanze verwendet werden.

12. Verfahren zum Herstellen von Kränzen aus frischen oder getrocknetem Grünmaterial, dass von kleinen Ästen mit daran angeordneten kleineren Seitenästen gebildet ist nach einem der vorhergehenden Ansprüche in Verbindung mit Anspruch 4, **dadurch gekennzeichnet, dass** die Seitenäste in Richtung die der kleinen Äste insbesondere manuell angelegt werden und dann zwischen die Haltemittel (6) gesteckt werden.

13. Vorrichtung zur Durchführung eines Verfahrens zum Verarbeiten von hintereinander angeordneten Dekorationsartikeln (1) und zur Herstellung von Kränzen nach einem der vorhergehenden Ansprüche, **dadurch gekennzeichnet, dass** sie eine Befestigungsvorrichtung (2), insbesondere in Form einer Nähmaschine, und eine bandförmige Zuführung (4) aufweist, wobei über die Zuführung (4) Dekorationsartikel (1) der Befestigungsvorrichtung (2) zuführbar sind und die Befestigungsvorrichtung (2) mehrere, hintereinander angeordnete Dekorationsartikel (1) zu einem zusammenhängenden Band (3) miteinander zu verbinden vermag.

14. Vorrichtung nach dem vorhergehenden Anspruch, **dadurch gekennzeichnet, dass** sie eine Ablängvorrichtung (4), über die zumindest an einer Seite die Dekorationsartikel (1) in der Länge beschneidbar sind und/oder einen Cutter (7) aufweist, der in Vorschubrichtung (V) hinter der Befestigungsvorrichtung (2) angeordnet ist und das zusammenhängende Band (3) in einzelne Abschnitte zu zerteilen vermag.

15. Vorrichtung nach einem der vorhergehenden Ansprüche, **dadurch gekennzeichnet, dass** die Zuführung (4) Haltemittel (6) aufweist, die nach oben von der Zuführung (4) hervorspringend in Vorschubrichtung (V) hintereinander angeordnet sind, wobei die Dekorationsartikel (1) zwischen zwei benachbarten Haltemittel (6) einlegbar sind.

16. Vorrichtung nach einem der vorhergehenden Ansprüche, **dadurch gekennzeichnet, dass** sie eine Umsetzvorrichtung, die die zusammengefügten Dekorationsartikel (1) zu greifen und an einen zu dekorierenden Körper anzulegen vermag, und/oder eine Fixiereinrichtung , die die an den zu dekorierenden Körper angelegten Dekorationsartikel (1) an dem Körper zu fixieren vermag, und/oder eine Zerkleinerungsvorrichtung aufweist, die größeren Verbunde der Dekorationsartikel (1) in die erforderliche Größe zu zerkleinern vermag.

17. Vorrichtung nach dem vorhergehenden Anspruch, **dadurch gekennzeichnet, dass** der Körper ein Römer eines Kranzes und die Fixiereinrichtung eine Bindemaschine ist, die die Dekorationsartikel (1) an dem Römer festbindet.
